# FASCICULE DE BREVET EUROPEEN

(11) **EP 0 812 161 B1**
(45) Date de publication et mention de la délivrance du brevet: **17.11.1999**
(21) Numéro de dépôt: 96905900.5
(22) Date de dépôt: 01.03.1996
(51) Int. Cl.: A61C 13/30

(54) **TENON DENTAIRE RADIO-OPAQUE EN MATERIAU COMPOSITE**
STRAHLENUNDURCHLÄSSIGER ZAHNSTIFT UND VERBUNDSTOFF
RADIO-OPAQUE TOOTH PIVOT MADE OF COMPOSITE MATERIAL

(30) Priorité: 01.03.1995 FR 9502363
(43) Date de publication de la demande: 17.12.1997
(73) Titulaire: Reynaud, Marc, F-38240 Meylan (FR); Reynaud, Pierre-Luc, 38120 Saint-Egrève (FR)
(72) Inventeur: REYNAUD, Marc, F-38240 Meylan (FR); REYNAUD, Pierre-Luc, F-38120 Saint-Egréve (FR); CHU, Manh, F-38120 Saint-Egréve (FR)
(74) Mandataire: Bruder, Michel
(86) Numéro de dépôt international: FR9600329
(87) Numéro de publication internationale: WO9626686

(56) Documents cités:
- EP-A- 0 385 892
- EP-A- 0 432 001
- FR-A- 2 588 181
- FR-A- 2 626 167

## Description

La présente invention concerne un tenon dentaire en matériau composite présentant une opacité permettant sa localisation facile par radiographie.

On sait qu'en art dentaire, afin de renforcer une dent, on fait appel à des tenons, la plupart du temps métalliques. Ces tenons, s'ils sont facilement localisables par les moyens classiques de la radiographie, ont cependant l'inconvénient de présenter des modules d'élasticité très différents de ceux des dents dans lesquelles ils sont fixés, si bien qu'ils ont tendance, en cours d'usage, à blesser la dentine, entraînant ainsi, à plus ou moins longue échéance, leur libération.

On a proposé pour éviter cet inconvénient de faire appel à des tenons en matériaux composites dont les modules d'élasticité sont proches de ceux de la dentine, si bien qu'ils préservent celle-ci, ce qui assure de ce fait un maintien durable du tenon.

De tels tenons sont la plupart du temps constitués d'éléments transparents aux rayons X, si bien qu'ils sont difficilement localisables, ce qui est gênant d'une part sur le plan médical, notamment dans le cas d'une ingestion accidentelle, et d'autre part sur le plan administratif dans le cas où l'on souhaite apporter une preuve de la mise en place de ces tenons.

On a ainsi proposé dans le brevet EP-A-432.001, qui forme la base pour le préambule de la revendication 1, ensemble de reconstitution coronoradiculaire comportant un tenon d'ancrage en matériau composite, du type à fibres de haute résistance noyées dans une résine formant une matrice. Ces fibres qui sont allongées dans le sens axial du tenon sont continues d'une extrémité à l'autre et possèdent des caractéristiques mécaniques voisines de celles de la dentine en ce qui concerne leur module d'élasticité transversal et supérieures à celles de la dentine en ce qui concerne la résistance à la compression/traction dans le sens longitudinal. Cependant, de tels tenons s'ils permettent d'éviter les inconvénients des tenons de la technique antérieure présentent néanmoins l'inconvénient de ne pas être radio-opaques et en conséquence difficilement localisables par un praticien.

Il est bien entendu possible, pour assurer l'opacité d'un tenon, d'incorporer à la résine dont il est constitué des charges radio-opaques que l'on essaie de répartir de façon régulière dans sa masse. Or on a constaté que, même lorsque ces charges étaient relativement bien réparties, le contour du tenon obtenu en radiographie X n'était pas parfaitement délimité, particulièrement lorsque la face externe du tenon avait subi un usinage spécifique. Pour éviter cet inconvénient une solution serait d'augmenter la quantité des charges utilisées. Cependant on a constaté que, pour obtenir un tenon dont le contour sous radiographie X soit parfaitement défini, il était nécessaire d'ajouter une quantité de charges telle que les qualités mécaniques du tenon se trouvaient alors très amoindries.

On connaît également par le brevet FR-A-2.626.167. un tenon dentaire constitué d'un corps allongé au centre duquel, dans un mode de mise en oeuvre de l'invention, est disposé un fil éventuellement en métal, qui est entouré d'une résine moulée chargée de fibres. Un tel dispositif s'il permet de localiser la présence d'un tenon en matériau composite, ne permet cependant d'en définir de façon précise les contours ce qui, dans le cas de certaines interventions peut se révéler particulièrement gênant. La présente invention a pour but de remédier à un tel inconvénient en permettant de définir le contour précis du tenon.

La présente invention a pour but de proposer un moyen permettant de réaliser un tenon dentaire dont le contour, obtenu sous radiographie X, soit parfaitement défini sans que, pour autant, ses qualité mécaniques s'en trouvent diminuées.

La présente invention a ainsi pour objet un tenon dentaire en matériau composite, caractérisé en ce qu'il comprend une âme centrale constituée d'une matrice de résine durcissable dans laquelle sont noyées des fibres qui confèrent au tenon l'essentiel des ses qualités mécaniques, cette âme centrale étant entourée d'une gaine, constituée d'au moins une couche de fibres faites d'un matériau radio-opaque.

Les fibres constituant la gaine pourront de préférence être constituées de fibres continues qui s'étendent sensiblement d'une extrémité à l'autre du tenon. Par ailleurs les fibres de l'âme centrale pourront être constituées de fibres transparentes aux rayons X.

Dans un mode de mise en oeuvre de l'invention la gaine périphérique est constituée d'au moins deux couches de fibres entrecroisées.

De façon intéressante les fibres constituant la gaine périphérique sont des fibres de silice, de céramique, de carbure de silicium, ou encore des fibres de verre à taux élevé d'oxyde de calcium.

On décrira ci-après, à titre d'exemple non limitatif, une forme d'exécution de la présente invention, en référence au dessin annexé sur lequel :
La figure 1 est une vue en coupe axiale et longitudinale d'un tenon suivant l'invention.
La figure 2 est une vue partielle agrandie en élévation du tenon représenté sur la figure 1.
La figure 3 est une vue partielle agrandie en élévation d'une variante de mise en oeuvre d'un tenon suivant l'invention.

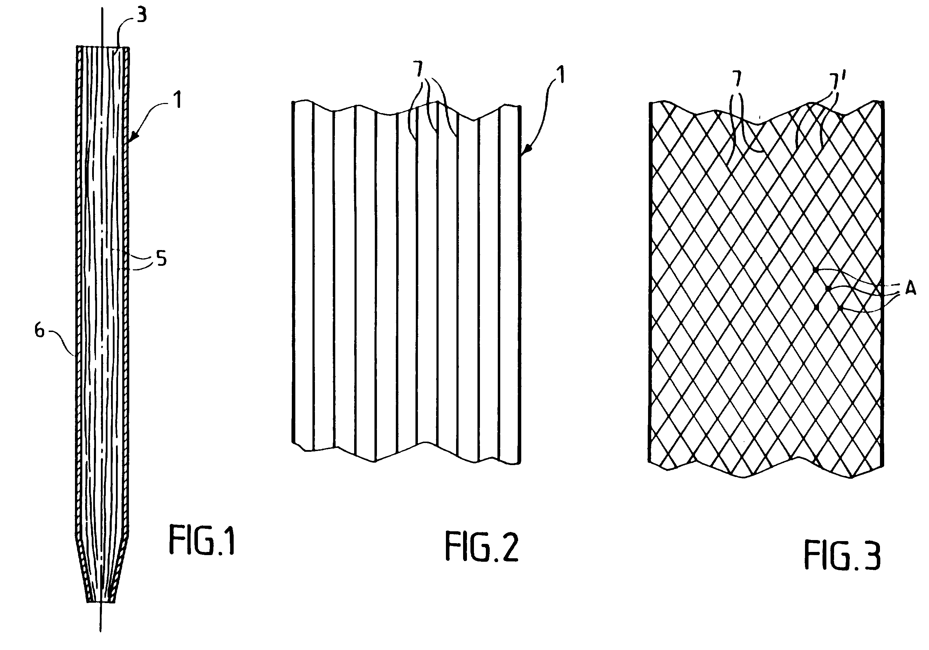

On a représenté sur les figures 1 et 2 un tenon dentaire 1 comprenant une âme centrale 3 formée d'une matrice de résine époxy dans laquelle sont noyées des fibres transparentes aux rayons X telles que des fibres de verre 5 qui s'étendent sur toute la longueur du tenon 1. La nature de ces fibres, leur diamètre et leur quantité sont déterminés par les qualités mécaniques que l'on souhaite donner au tenon 1.

La périphérie du tenon comporte une gaine 6 formée d'une couche de fibres radio-opaques 7 qui sont disposées longitudinalement sur toute la longueur du tenon 1.

Ces fibres 7 sont de préférences des fibres isotropes ce qui leur permet de ne modifier que légèrement par leur présence les modules d'élasticité transversal et longitudinal conférés au tenon 1 par l'âme 3 de celui-ci. De préférence, et pour la même raison, le module d'élasticité de ces fibres 7 est aussi faible que possible. Leur indice de réfraction est, quant à lui, aussi élevé que possible. L'épaisseur de la gaine périphérique 6 s'étend sur une ou plusieurs couches et est particulièrement faible en regard de l'épaisseur globale du tenon 1.

Pour constituer la gaine 6 on peut ainsi faire appel à des fibres de céramique qui ont des propriétés isotropes et dont les modules d'élasticité longitudinal et transversal sont de l'ordre de 186 GPa et dont l'indice de réfraction est de l'ordre de 1,62.

On peut également faire appel à des fibres de carbure de silicium dont le module d'élasticité est voisin de celui des fibres de céramique mais qui possèdent un indice de réfraction supérieur à 2. De telles fibres permettent, à opacité égale, d'être utilisées en quantité moindre, ce qui permet de minimiser leur influence sur les modules d'élasticité transversal et longitudinal du tenon 1.

On a constaté que les tenons dentaires conformes à l'invention possédaient sur les radiographies X un contour parfaitement délimité, ce qui d'une part permet de définir leur positionnement précis par rapport à la dent mais également de définir leur forme spécifique.

Les fibres 7 constituant la gaine périphérique 6 peuvent être jointives, mais il est bien entendu possible, suivant l'invention, de constituer une gaine périphérique au moyen de fibres non jointives venant éventuellement en contact entre elles ponctuellement.

Dans un mode de mise en oeuvre de l'invention, représenté sur la figure 3, la gaine périphérique 6 est ainsi constituée de deux couches de fibres 7 et 7' superposées et croisées qui sont enroulées en hélice sur la périphérie du tenon 1. Une telle disposition permet d'obtenir une répartition régulière, sur toute la surface externe du tenon, de points de plus grande opacité correspondant aux points de croisement A des fibres 7 et 7'. La répartition régulière obtenue en périphérie du tenon 1 permet de définir de façon nette le contour radiographique de celui-ci.

Suivant l'invention on utilise les éléments centraux constituant l'âme du tenon 1 et notamment la nature, la quantité, et la répartition des fibres, pour conférer à celui-ci les qualités mécaniques souhaitées, et notamment les modules d'élasticité longitudinal et transversal. Les fibres radio-opaques disposées en périphérie pourront être telles qu'elles aient sur les caractéristiques mécaniques du tenon une influence la plus faible possible, de façon que leur rôle unique soit de contrôler la radio-opacité du tenon.

On peut aussi, pour constituer la gaine 6, utiliser des fibres de verre à taux élevé d'oxyde de calcium, de l'ordre de 17% à 25% en poids, telles que celles commercialisées par la Société OWENS CORNING FIBERGLASS sous la marque " ECR GLASS ".

Ces fibres présentent l'avantage de posséder un indice de réfraction élevé, de l'ordre de 1,58, ainsi qu'une excellente résistance à la corrosion. Ces fibres permettent, en utilisant par ailleurs des fibres de verre à haute résistance pour constituer l'âme centrale, de réaliser un tenon dentaire de grande homogénéité.

Par ailleurs, ces fibres en raison de leur teinte, sont particulièrement intéressantes sur le plan esthétique.

## Revendications

1. Tenon dentaire en matériau composite, du type comprenant une âme centrale (3) constituée d'une matrice de résine durcissable dans laquelle sont noyées des fibres (5) qui confèrent au tenon (1) l'essentiel des ses qualités mécaniques, caractérisé en ce que cette âme centrale (3) est entourée d'une gaine (6), constituée d'au moins une couche de fibres (7) faites d'un matériau radio-opaque.

2. Tenon suivant la revendication 1 caractérisé en ce que la gaine est constituée de fibres continues qui s'étendent sensiblement d'une extrémité à l'autre du tenon.

3. Tenon suivant l'une des revendications 1 ou 2 caractérisé en ce que les fibres de l'âme centrale sont transparentes aux rayons X.

4. Tenon suivant l'une des revendications précédentes caractérisé en ce que la gaine périphérique (6) est constituée d'au moins deux couches de fibres (7) entrecroisées.

5. Tenon suivant l'une des revendications 1 à 3 caractérisé en ce que la gaine périphérique (6) est constituée d'au moins une couche de fibres orientées dans le même sens que les fibres centrales

6. Tenon suivant l'une quelconque des revendications précédentes caractérisé en ce que les fibres constituant la gaine périphérique (6) sont des fibres de carbure de silicium.

7. Tenon suivant l'une quelconque des revendications 1 à 5 caractérisé en ce que les fibres constituant la gaine périphérique (6) sont des fibres de silice.

8. Tenon suivant l'une des revendications 1 à 5 caractérisé en ce que les fibres constituant la gaine périphérique (6) sont des fibres de céramique.

9. Tenon suivant l'une quelconque des revendications 1 à 5 caractérisé en ce que les fibres constituant la gaine périphérique (6) sont des fibres de verre à taux élevé d'oxyde de calcium.

10. Tenon suivant la revendication 9 caractérisé en ce que les fibres de verre contiennent entre 15% et 30% en poids d'oxyde de calcium.

## Claims

1. Tooth pivot made of composite material, of the type comprising a central core (3) constituted by a matrix of hardenable resin in which are embedded fibers (5) which give the pivot (1) the essential of its mechanical qualities, characterized in that this central core (3) is surrounded by a sheath (6), constituted by at least one layer of fibers (7) made of a radio-opaque material.

2. Pivot according to Claim 1, characterized in that the sheath is constituted by continuous fibers which extend substantially from one end of the pivot to the other.

3. Pivot according to one of Claims 1 or 2, characterized in that the fibers of the central core are transparent to X-rays.

4. Pivot according to one of the preceding Claims, characterized in that the peripheral sheath (6) is constituted by at least two intersecting layers of fibers (7).

5. Pivot according to one of Claims 1 to 3, characterized in that the peripheral sheath (6) is constituted by at least one layer of fibers oriented in the same direction as the central fibers.

6. Pivot according to any one of the preceding Claims, characterized in that the fibers constituting the peripheral sheath (6) are silicon carbide fibers.

7. Pivot according to any one of Claims 1 to 5, characterized in that the fibers constituting the peripheral sheath (6) are silica fibers.

8. Pivot according to one of Claims 1 to 5, characterized in that the fibers constituting the peripheral sheath (6) are ceramic fibers.

9. Pivot according to any one of Claims 1 to 5, characterized in that the fibers constituting the peripheral sheath (6) are glass fibers with a high proportion of calcium oxide.

10. Pivot according to Claim 9, characterized in that the glass fibers contain between 15% and 30% by weight of calcium oxide.

## Patentansprüche

1. Zahnstift aus Compositwerkstoff vom Typ, aufweisend einen zentralen Kern (3), der aus einer Matrize aus härtbarem Harz gebildet ist, in welchem Fasern (5) versenkt sind, die dem Zahnstift (1) seine wesentlichen mechanischen Eigenschaften verleihen,
dadurch gekennzeichnet, daß dieser zentrale Kern (3) von einer Hülle (6) umgeben ist, die aus mindestens einer Schicht von Fasern (7) gebildet ist, die in einem strahlenundurchlässigen Werkstoff ausgeführt sind.

2. Zahnstift nach Anspruch 1,
dadurch gekennzeichnet, daß die Hülle aus durchgehenden Fasern gebildet ist, die sich im wesentlichen von einem Ende zum anderen Ende des Zahnstifts erstrecken.

3. Zahnstift nach Anspruch 1 oder 2,
dadurch gekennzeichnet, daß die Fasern des zentralen Kerns für Röntgenstrahlen durchlässig sind.

4. Zahnstift nach einem der vorhergehenden Ansprüche,
dadurch gekennzeichnet, daß die periphere Hülle (6) aus mindestens zwei Schichten (7) von gekreuzten Fasern gebildet ist.

5. Zahnstift nach einem der Ansprüche 1 bis 3,
dadurch gekennzeichnet, daß die periphere Hülle (6) aus mindestens einer Schicht von Fasern gebildet ist, die in derselben Richtung ausgerichtet sind wie die zentralen Fasern.

6. Zahnstift nach einem der vorhergehenden Ansprüche,
dadurch gekennzeichnet, daß die die periphere Hülle (6) bildenden Fasern Siliziumkarbidfasern sind.

7. Zahnstift nach einem der Ansprüche 1 bis 5,
dadurch gekennzeichnet, daß die die periphere Hülle (6) bildenden Fasern Silicafasern sind.

8. Zahnstift nach einem der Ansprüche 1 bis 5,
dadurch gekennzeichnet, daß die die periphere Hülle (6) bildenden Fasern Keramikfasern sind.

9. Zahnstift nach einem der Ansprüche 1 bis 5,
dadurch gekennzeichnet, daß die die periphere Hülle (6) bildenden Fasern Glasfasern mit hohem Kalziumoxidgehalt sind.

10. Zahnstift nach Anspruch 9,
dadurch gekennzeichnet, daß die Glasfasern zwischen 15 und 30 Gewichtsprozent Kalziumoxid enthalten.
